# EUROPEAN PATENT SPECIFICATION

(11) **EP 2 458 201 B1**
(45) Date of publication and mention of the grant of the patent: **25.05.2016**
(21) Application number: 11190476.9
(22) Date of filing: 24.11.2011
(51) Int. Cl.: F03D 7/02

(54) **Wind turbine with hydraulic blade pitch system**
Windturbine mit hydraulischem Blattwinkelverstellsystem
Éolienne dotée d'un système de pas hydraulique

(30) Priority: 26.11.2010 DK 201070508; 26.11.2010 US 417338 P
(43) Date of publication of application: 30.05.2012
(73) Proprietor: Vestas Wind Systems A/S, 8200 Aarhus N (DK)
(72) Inventor: Andersen, Jesper Lykkegaard, 8543 Hornslet (DK); Madsen, Jens Bay, 8000 Aarhus (DK)
(74) Representative: Vestas Patents Department

(56) References cited:
- DE-A1- 3 009 922
- DE-A1- 19 948 997
- DE-U1- 20 317 749
- US-A1- 2007 217 912
- US-A1- 2008 219 846

## Description

The present invention relates to a wind turbine have a rotor with adjustable blades and a hydraulic blade pitch system for controlling the pitch angle of the blade.

### BACKGROUND

Wind turbines having blade pitch systems for adjusting the pitch angle of the blades have been known for many years, typically employing electric pitch drives or hydraulic pitch drives. Early examples of hydraulic pitch drives are disclosed e.g. in US 4,348,155 and US 4,352,634 , both of United Technologies. The hydraulic valves used to control the flow of liquid to the linear hydraulic actuators are disclosed as switch valves, i.e. valves operated in an on-off mode and the pitching torque is not adjustable.

In EP 1 835 174 B1 and US 2007/0217912 A1 of Robert Bosch GmbH is disclosed a wind turbine having a hydraulic pitch drive where the flow of liquid is controlled by means of a number of switch valves are arranged in parallel and are operable in different combinations in order to provide what is known as digital hydraulics for precisely adjusting the flow of liquid to the hydraulic pitch drive. Thereby, the pitching torque and thereby the pitch speed can be adjusted to a required value.

The use of proportional hydraulic valves for controlling the flow of liquid to the hydraulic pitch drive is disclosed e.g. in EP1 533 520 of Hawe Hydraulik and in EP 2 072 815 of Gamesa. Proportional hydraulic valves allow for a precise adjustment of the flow of liquid to the hydraulic pitch drive and thereby as well an adjustment of the pitch speed.

Document US 2008/0219846 A1 shows an apparatus for hydraulically adjusting the blades of an impeller of an axial-flow fan, comprising an adjustment cylinder that is disposed on both sides of a piston displaceably in the cylinder and which has a first chamber and a second chamber respectively provided with a connection to control oil lines connected to four-way valves. Not only a feed line leading to one of the control oil lines, but also a return line connected to the other control oil line, is each divided into two parallel branch lines. Two redundant four-way valves are provided, each being disposed in one of the parallel branch lines. Disposed in each branch line of each control oil line, between the respective connection and the respective four-way valve, is a seat valve that closes by spring force.

A typical system of individual blade adjustment for wind turbines is known from document DE 199 48 997 A1.

The location of wind turbines at geographical areas where the accessibility for maintenance and repair is difficult, such as off-shore locations and in dessert, mountain and polar regions, there is a request for systems in the wind turbine which are robust to malfunctions of parts of the system, so that the operation of the wind turbine is not necessarily brought to a stop in case of component failure but may be continued at full or partial load until e.g. scheduled maintenance of the wind turbine. Thereby, the percentage of operational time can be increased without requiring more maintenance and repair.

Thus, it is an object of the present invention to provide a hydraulic blade pitch system which has an improved robustness.

### BRIEF DESCRIPTION OF THE INVENTION

The above described object is solved by a wind turbine in accordance with independent claim 1. The further dependent claims 2 to 9 define more advantageous embodiments of the wind turbine of claim 1.

The present invention relates to a wind turbine according to claim 1.

Controlling the operation of the hydraulic blade pitch drive of a specific blade by means of two or more proportional hydraulic spool valves coupled in parallel is advantageous in that the size and thereby the cost of the individual valves can be reduced while at the same time ensuring the amount of fluid flowing through the valves can be adjusted even faster, in that not only can the flow through the individual valves be adjusted but according to the present invention the overall capacity can also be adjusted by controlling the number of valves that are engaged. And even further by using two or more valves coupled in parallel the system is provided with redundancy in that if one valve fails, pitch operation can still continue by means of the remaining valves until the problem can be fixed or until operation of the wind turbine is stopped in a controlled fashion.

With the term hydraulic blade pitch drive is understood a part comprising at least one hydraulic motor, such as a linear actuator or an angular actuator, which is arranged to drive a rotation of the blade about a longitudinal axis thereof by providing a driving torque between the blade and the rotor hub to which the blade is connected by means of a pitch bearing.

A proportional hydraulic spool valve (in the following referred to as a proportional hydraulic valve) is a valve that may be controlled continuously between a closed position and a fully open position, normally by means of a proportional solenoid or a controlled pilot pressure in a pilot liquid or gas.

However, it should be emphasised that the term "*proportional Hydraulic spool valves*" does include any kind of valve that controls the direction of hydraulic fluid flow by controlling the position of a spool so that channels in the hydraulic system are blocked or opened. The size of the flow through the valve is among other dependent on the spools actual position which in turn is dependent on a control signal input-hence the "proportional" part of the term refers to the relationship between the control signal input (size, length etc.) and the spool position.

However, it should be emphasised that the relationship between the size of the flow through the valve and the size or length of the control signal in no way have to be directly proportional. E.g. depending on the pressure drop over the valve and on the actual design of the valve and particularly the spool, the relationship between the size or length of the control signal and the size of the flow through the valve could be non-linear i.e. the flow could increase exponentially or according to some kind of curve.

The spools position is typically controlled by a solenoid in accordance with the size of the voltage or current of the control signal supplying the solenoid but other types of control signals are feasible.

The position of the spool could also be controlled by means of a motor whereby the time the motor was running would be substantially proportionally with the position of the spool - but not necessary with the size of the flow as discussed above. A valve where the spool position is controlled by a motor is often referred to as servo valves.

A particularly preferred proportional hydraulic valve for the present invention is 4/3-way valves, i.e. valves having four ports, a pump port (P), a tank port (T) and two actuator ports (A, B), and three positions, a closed position, a position connecting the pump port (P) to actuator port A and tank port (T) to actuator port B, and a third position connecting the pump port (P) to actuator port B and tank port (T) to actuator port A. In the two latter positions, the opening of the valve may be controlled continuously between the closed position and a fully open position.

The proportional hydraulic valves are mutually connected in parallel which means that the outlet ports (actuator ports) of the valves are connected to the inlet port or ports of the hydraulic blade pitch drive so that said inlet port or ports may be fed with a flow of pressurised liquid from each of the parallel connected proportional hydraulic valves. For e.g. a linear hydraulic actuator, i.e. a hydraulic cylinder, a port to an inner chamber, the bottom chamber or the piston rod chamber, is an inlet port when the piston is moved in one direction and an outlet port when the piston is moved in the opposite direction. However, the flow from a port when acting as an outlet port may be drained from the hydraulic actuator without passing the proportional hydraulic valves as exemplified below. In one embodiment, the flow to the hydraulic blade pitch drive may be provided from all of the at least two proportional hydraulic valves simultaneously, in other embodiments the control system is adapted to only allow the proportional hydraulic valves to operate and feed a flow of liquid to a given port alternately. In a particular embodiment are the two or more proportional hydraulic valves furthermore mutually connected in parallel so that at least one return flow of liquid from the hydraulic blade pitch drive may be received by all of the at least two proportional hydraulic valves simultaneously.

By providing at least two proportional hydraulic valves connected in parallel to each other, several advantages are obtained. The plurality of proportional valves connected in parallel will provide a redundancy to the system, so that the malfunction of one of the valves will not hinder the operation of the wind turbine. Furthermore, the provision of two or more proportional valves instead of one enables the use of smaller, off-the-shelve components for even larger wind turbines, which components are less expensive and generally have a high reliability.

In one particular embodiment, at least one of said valves is arranged to be inoperative at relatively lower pitch speeds and to be operated together with one or more of the remaining of said valves for providing relatively higher pitch speeds.

In another embodiment, one of said valves is arranged to be operated as a back-up in case of a malfunction of one or more of the remaining of said valves.

In a preferred embodiment, the hydraulic blade pitch system of the wind turbine comprises three valves connected in parallel for controlling said flow of liquid to the hydraulic blade pitch drive for each blade. Thereby, the valves may be designed so that full redundancy is provided, i.e. so that the normal operation is maintained with the use of two of the three proportional valves.

In another preferred embodiment, the two or more proportional valves in parallel are applied in a wind turbine where the hydraulic blade pitch drive for each of said blades comprises at least two linear hydraulic actuators, in particular three linear hydraulic actuators, connected to the blade and to a rotor hub of the rotor and wherein the parallel connected proportional hydraulic valves are arranged to control the flow of liquid to each of the linear hydraulic actuators of that blade. In a simple embodiment of such pitch drive system, the actuators of the hydraulic blade pitch drive for each of said blades are of identical configuration, i.e. have the same piston area and piston rod area and are arranged to operate in the same direction with respect to the blade, and may therefore be mutually connected in parallel so that the piston rod chambers of the actuators are mutually connected and the bottom chambers of the actuators are mutually connected.

It is furthermore an advantageous embodiment of the present invention that the pitch drive system of the wind turbine comprises valve means arranged for selectively separating the parallel connection of the valves, so that a malfunctioning valve may be separated from the remaining of the system in order to avoid a possible negative influence on the operability of the system from the malfunctioning valve.

According to the present invention, the hydraulic blade pitch drive for each of said blades comprises at least one linear hydraulic actuator connected to the blade and to a rotor hub of the rotor and wherein said at least two parallel connected valves are arranged to provide a flow of liquid to a piston rod chamber(s) of the hydraulic linear actuator(s) via at least one first one-way valve and the piston rod chamber(s) is/are connected to a pressure line for providing pressurised fluid to said valves via a second one-way valve so as to allow regeneration of the pressure.

### BRIEF DESCRIPTION OF THE DRAWING

Embodiments of the present invention are discussed in the following with reference to the enclosed drawing, of which
- Fig. 1: illustrates a large modern wind turbine as seen from the front,
- Fig. 2: illustrates a wind turbine hub comprising three blades as seen from the front,
- Fig. 3: illustrates a simplified cross section of a wind turbine nacelle as seen from the side,
- Fig. 4: is a diagram of an exemplary embodiment.
- Fig. 5: is a diagram of an exemplary embodiment, and
- Fig. 6: is a diagram of an embodiment of the invention.

### DETAILED DESCRIPTION OF EMBODIMENTS OF THE PRESENT INVENTION

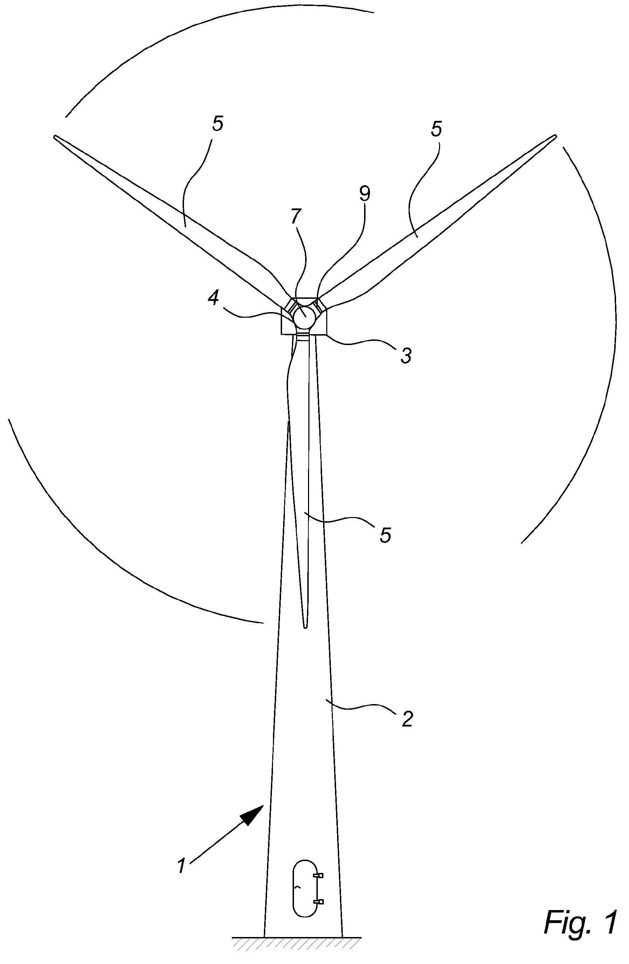

Fig. 1 illustrates a wind turbine 1, comprising a tower 2 and a wind turbine nacelle 3 positioned on top of the tower 2. The wind turbine rotor 4, comprising three wind turbine blades 5, is connected to the nacelle 3 through the low speed shaft which extends out of the nacelle 3 front.

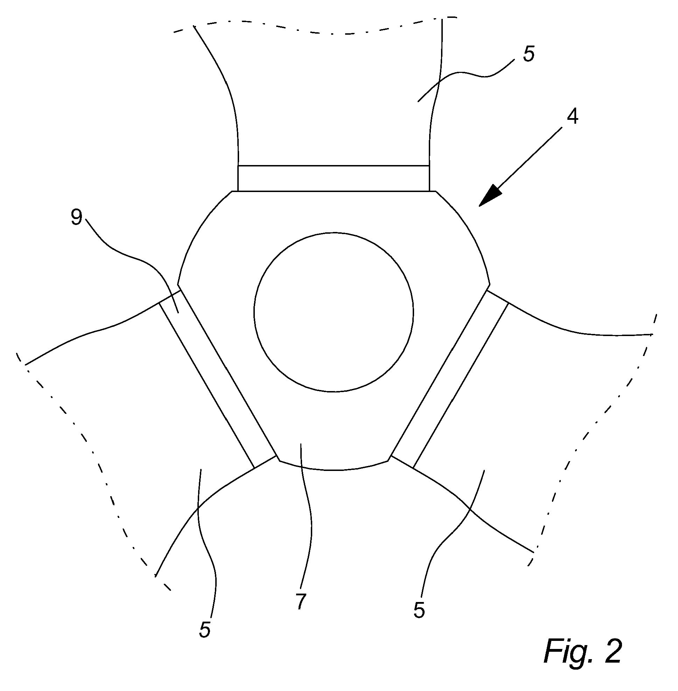

Fig. 2 illustrates a wind turbine rotor 4 comprising a hub 7 and three blades 5 as seen from the front.

As illustrated are the pitch bearings 9 arranged between the blades 5 and the hub 7 to enable that the blades 5 can be rotated around their longitudinal axis and to transfer forces mainly from three different sources. The blades 5 (and the bearings 9 themselves of course) are under constant influence of the force of gravitation. The direction of the gravitational force varies depending on the blade's 5 position, inducing different loads on the pitch bearings 9. When the blade is in motion the bearing 9 is also under influence of a centrifugal force, which mainly produces an axial pull in the bearing 9. Finally the bearings 9 are under influence of the wind load on the blades 5. This force is by far the greatest load on the bearings 9 and it produces a massive moment, which the bearings 9 have to stand.

The load on and from all the pitch bearings 9 has to be transferred to the hub 7 and further into the rest of the wind turbine 1 and the pitch bearing 9 at the same time has to enable that the blade 5 can be pitched.

In this embodiment the rotor 4 comprises three blades 5 but in another embodiment the rotor 4 could comprise one, two, four or more blades 5.

In this embodiment the wind turbine 1 is a pitch regulated wind turbine 1 but in another embodiment the wind turbine could just as well be an active stall regulated wind turbine 1 since both pitch regulated wind turbines 1 and active stall regulated wind turbines 1 comprises a hydraulic blade pitch system 6 for pitching the blades 5.

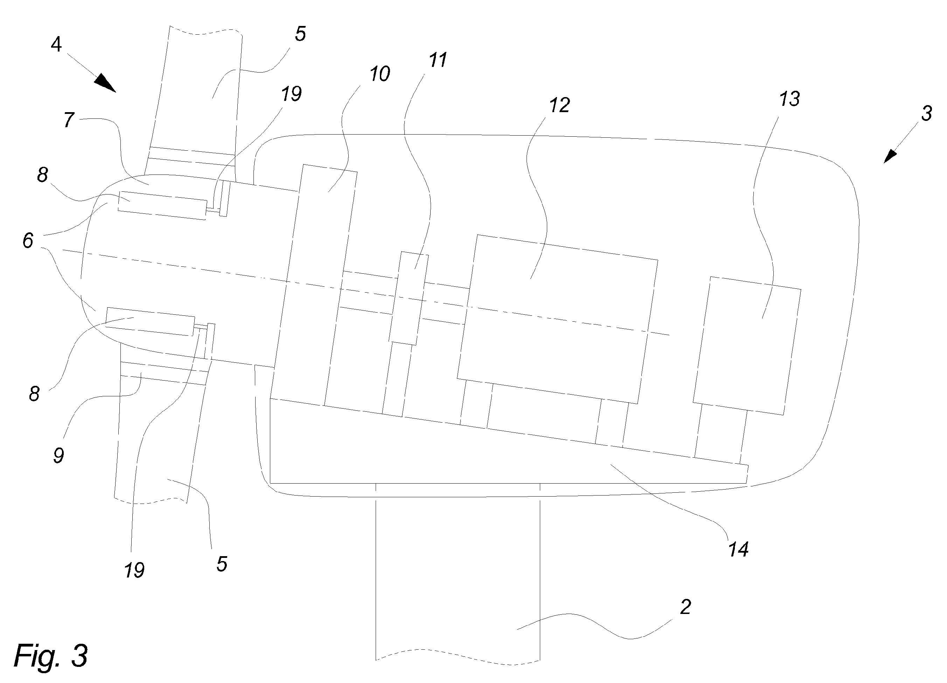

Fig. 3 illustrates a simplified cross section of a nacelle 3 of a prior art wind turbine 1, as seen from the side. Nacelles 3 exist in a multitude of variations and configurations but in most cases the drive train in the nacelle 3 almost always comprise one or more of the following components: a gearbox 10, a coupling (not shown), some sort of breaking system 11 and a generator 12. A nacelle 3 of a modern wind turbine 1 can also include a converter 13 (also called an inverter) and additional peripheral equipment such as further power handling equipment, control cabinets, hydraulic systems, cooling systems and more.

The weight of the entire nacelle 3 including the nacelle components 10, 11, 12, 13 is carried by a nacelle structure 14. The components 10, 11, 12, 13 are usually placed on and/or connected to this common load carrying nacelle structure 14. In this simplified embodiment the load carrying nacelle structure 14 only extends along the bottom of the nacelle 3 e.g. in the form of a bed frame to which some or all the components 10, 11, 12, 13 are connected. In another embodiment the load carrying structure 14 could comprise a gear bell which through a main bearing (not shown) could transfer the load of the rotor 4 to the tower 2, or the load carrying structure 14 could comprise several interconnected parts such as latticework.

In this embodiment the hydraulic blade pitch system 6 comprise means for rotating the blades 5 in the form of hydraulic linear actuators 15a, 15b, 15c connected to the hub 7 and the respective blades 5.

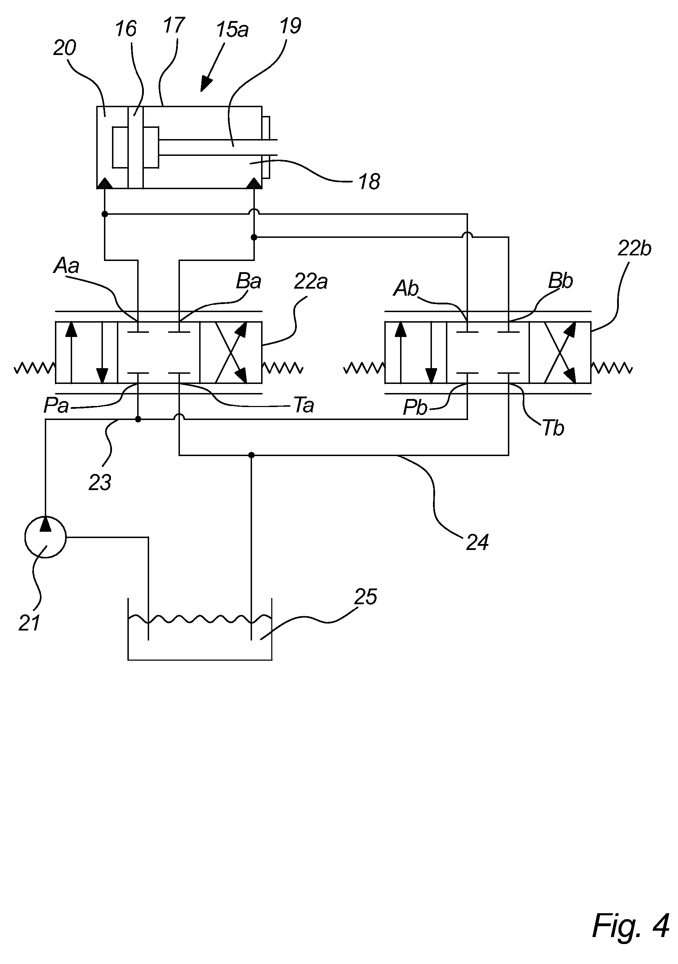

Fig. 4 is a diagram of main components of a hydraulic blade pitch system for a single blade 5 of a wind turbine 1 according to an exemplary embodiment, comprising a linear hydraulic actuator 15a with a piston 16 arranged displaceable within a cylinder 17 which is divided by the piston 16 into a piston rod chamber 18 or front chamber (the internal chamber comprising the piston rod 19) of the cylinder 17 and a bottom chamber 20 or rear chamber (the internal chamber which does not comprise the piston rod 10). The piston rod 19 is connected (not shown) to the hub 7 of the wind turbine rotor 4 and the cylinder 17 is connected (not shown) to the blade 5 so as to effect an angular displacement of the blade 5 when liquid under pressure is applied to the piston rod chamber 18 or to the bottom chamber 20. The flow of pressurised liquid from the hydraulic pump 21 to the linear hydraulic actuator 15a is controlled by means of two proportional hydraulic valves 22a, 22b. The hydraulic pump 21 may be arranged for each blade as shown in Fig. 4 or may be a central arrangement for providing pressurised liquid to the hydraulic blade pitch systems for each of the blades 5.

The proportional hydraulic valves 22a, 22b, have pressure ports Pa, Pb connected via the pressure line 23 to the hydraulic pump 21 and tank ports Ta, Tb, connected via the tank line 24 to the low pressure tank 25. One actuator port Aa, Ab of each valve 22a, 22b, connects to the bottom chamber 20 of the hydraulic linear actuator 15a, whereas the other actuator ports Ba, Bb are connected to the piston rod chamber 18 of the hydraulic linear actuator 15a.

The proportional hydraulic valves 22a, 22b are biased by springs towards a neutral centre position in which the ports are closed and no liquid flows through the valves. The valves 22a, 22b may be shifted in one direction by means of solenoids or a controlled pressurised pilot liquid so that the pressure ports Pa, Pb are gradually opened towards the first actuator ports Aa, Ab and the tank ports Ta, Tb are gradually opened towards the second actuator ports Ba, Bb, or the valves 22a, 22b may be shifted in the opposite direction causing the pressure ports Pa, Pb to be gradually opened towards the second actuator ports Ba, Bb and the tank ports Ta, Tb to be gradually opened towards first actuator ports Aa, Ab. Thus, the operation of the proportional hydraulic valves 22a, 22b, may be used to selectively move the piston 16 in one or the other direction so as to pitch the blade with a controlled and variable pitch speed in one direction or the other. The two valves 22a, 22b, may be operated synchronous so that the flow through the valves are substantially equal or they may alternatively be operated so that one of the valves 22a, 22b, is operated for lower flow rates and thus lower pitch speeds, whereas the other of the valves 22a, 22b only is operated when a higher pitch speed is required. In a further alternative, only one of the valves 22a, 22b is operated under ordinary operation of the wind turbine and the other valve is only operated in case of malfunction of the first valve 22a, 22b. The provision of two proportional hydraulic valves 22a, 22b provide the hydraulic blade pitch system with a redundancy so that the system is operable even though on of the valves should malfunction.

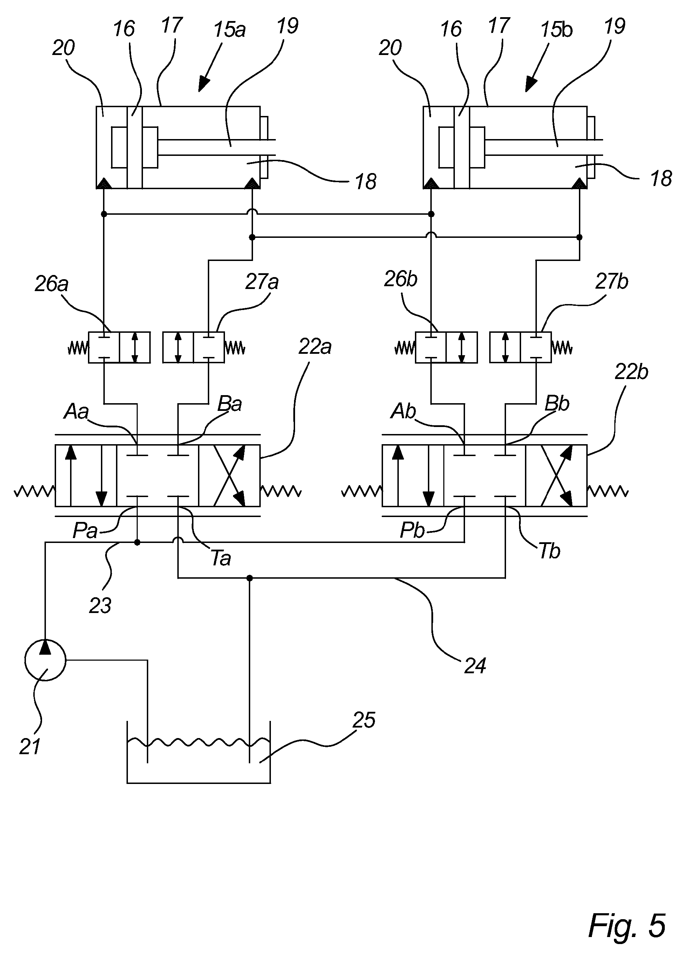

In Fig. 5 is a diagram of main components of a hydraulic blade pitch system for a single blade 5 of a wind turbine 1 according to a further exemplary embodiment, comprising two linear hydraulic actuators 15a, 15b connected in parallel and both arranged to adjust the pitch angle of the same wind turbine blade 5.

The parallel connection of the two actuators includes that the piston rod chambers 18 and the bottom chambers 20 of the actuators 15a, 15b are mutually connected to each other with liquid connection lines as clearly shown on the diagram in Fig. 5. The general arrangement of the hydraulic blade pitch system shown in Fig. 5 is similar to the one shown in Fig. 4.

However, the arrangement of Fig. 5 has a particular feature for selectively separating a malfunctioning proportional valve 22a, 22b from the remaining of the system in order to avoid a possible negative influence on the operability of the system from the malfunctioning proportional valve 22a, 22b. According to this particular feature, which could also be applied to the system of Fig. 4, the lines connecting the first actuator ports Aa, Ab of the hydraulic proportional valves 22a, 22b with the bottom chambers 20 of the hydraulic linear actuators 15a, 15b are equipped with 2/2-ways poppet-type valves 26a, 26b and the lines connecting the second actuator ports Ba, Bb to the piston rod chambers 18 of the hydraulic linear actuators 15a, 15b are also equipped with 2/2-ways poppet-type valves 27a, 27b. These poppet valves 26a, 26b, 27a, 27b are spring biased towards a closed position in which no liquid flows through the valves 26a, 26b, 27a, 27b and the valves may be operated to the open position during normal operation of the hydraulic blade pitch system by means of solenoids or a controlled pressurised pilot liquid.

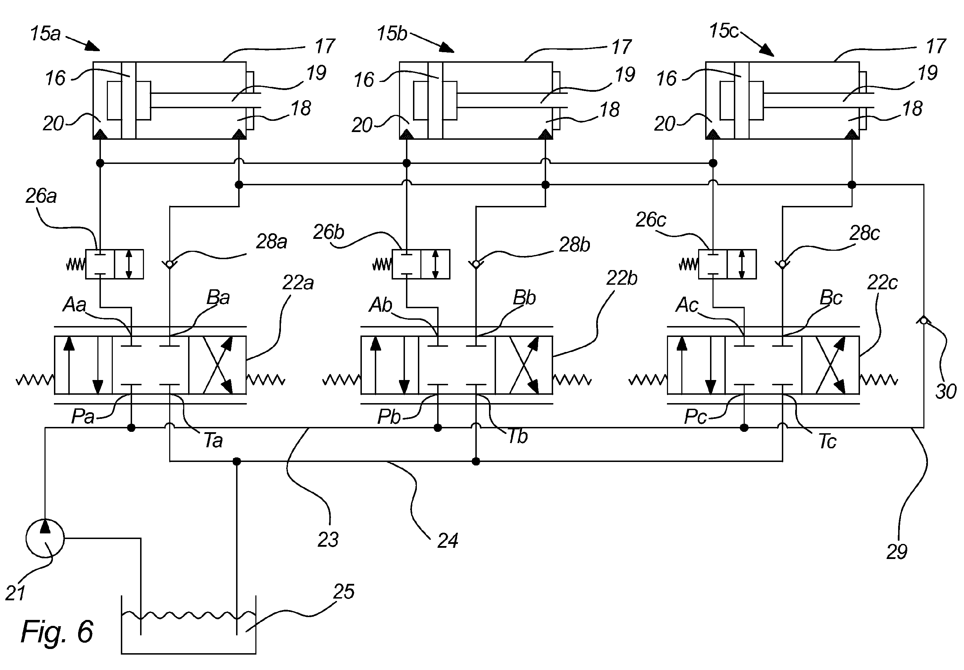

In Fig. 6 is a diagram of main components of a hydraulic blade pitch system for a single blade 5 of a wind turbine 1 according to an embodiment of the present invention, comprising three linear hydraulic actuators 15a, 15b, 15c connected in parallel and both arranged to adjust the pitch angle of the same wind turbine blade 5 as well as three proportional hydraulic valves 22a, 22b, 22c mutually connected in parallel for controlling a flow of liquid to the linear hydraulic actuators 15a, 15b, 15c.

The parallel connection of the three actuators includes that the piston rod chambers 18 and the bottom chambers 20 of the actuators 15a, 15b, 15c are mutually connected to each other with liquid connection lines as clearly shown on the diagram in Fig. 6. The general arrangement of the hydraulic blade pitch system shown in Fig. 6 is similar to the ones shown in Figs. 4 and 5. When tree proportional hydraulic valves 22a, 22b, 22c are provided mutually connected in parallel it is possible to design the hydraulic blade pitch system so that only two valves will suffice for normal operation of the wind turbine and one valve is redundant, whereby it is achieved that the system may be made from off-the-shelf proportional valves and that full redundancy in case of malfunction of one of the proportional valves is obtained.

The arrangement of Fig. 6 has a further particular feature for selectively separating a malfunctioning proportional valve 22a, 22b, 22c from the remaining of the system in order to avoid a possible negative influence on the operability of the system from the malfunctioning proportional valve 22a, 22b, 22c, where this feature is presented as an alternative to the arrangement for separating a malfunctioning valve shown in Fig. 5. According to this particular feature, which could also be applied to the system of Figs. 4 and 5, the lines connecting the first actuator ports Aa, Ab, Ac of the hydraulic proportional valves 22a, 22b, 22c with the bottom chambers 20 of the hydraulic linear actuators 15a, 15b, 15c are equipped with 2/2-ways poppet-type valves 26a, 26b and the lines connecting the second actuator ports Ba, Bb, Bc to the piston rod chambers 18 of the hydraulic linear actuators 15a, 15b, 15c are instead equipped with check valves 28a, 28b, 28c that ensure that liquid may flow from the pressure line 23 through the proportional valves 22a, 22b, 22c and to the piston rod chambers 18 of the hydraulic linear actuators 15a, 15b, 15c but hinder a flow of liquid in the opposite direction from the piston rod chamber 18 through the proportional valves 22a, 22b, 22c and to the tank line 24. Instead, when the proportional valves 22a, 22b, 22c are operated to allow a flow of liquid from the pressure line 23 to the bottom chambers 20 of the hydraulic linear actuators 15a, 15b, 15c, the liquid which is pressed out from the piston rod chambers 18 passes through a separate return line 29 equipped with a check valve 30 and to the pressure line 23 so as to regenerate the pressure. This is possible because the area of the piston 16 area facing the bottom chamber 20 is larger than the piston 16 area on the side facing the piston rod chambers 18 due to the presence of the piston rod 19. Thus, the pressure of the liquid in the piston rod chambers 18 will be larger than the pressure of the liquid in the bottom chambers 20 which allow for the regeneration. In an alternative embodiment, one of the check valves 28a, 28b, 28c is controllable to an open position, so that the liquid content of the piston rod chambers 18 may drain to the tank line 24 instead of the pressure line 23 in case a higher pressure difference over the pistons 16 and thus a higher pitching torque is requested.

### LIST OF REFERENCE NUMBERS AND SYMBOLS

- 1.: Wind turbine
- 2.: Tower
- 3.: Nacelle
- 4.: Rotor
- 5.: Blade
- 6.: Hydraulic blade pitch system
- 7.: Hub
- 8.: Hydraulic blade pitch drive
- 9.: Pitch bearing
- 10.: Gearbox
- 11.: Brake
- 12.: Generator
- 13.: Converter
- 14.: Nacelle structure
- 15a.: First linear hydraulic actuator
- 15b.: Second linear hydraulic actuator
- 15c.: Third linear hydraulic actuator
- 16.: Piston
- 17.: Cylinder
- 18.: Piston rod chamber
- 19.: Piston rod
- 20.: Bottom chamber
- 21.: Hydraulic pump
- 22a.: First 4/3-way proportional hydraulic valve
- 22b.: Second 4/3-way proportional hydraulic valve
- 22c.: Third 4/3-way proportional hydraulic valve
- 23.: Pressure line
- 24.: Tank line
- 25.: Tank
- 26a.: Poppet-type 2/2-way valve connecting the first actuator port of the first proportional hydraulic valve to the bottom chambers of the hydraulic linear actuators
- 26b.: Poppet-type 2/2-way valve connecting the first actuator port of the second proportional hydraulic valve to the bottom chambers of the hydraulic linear actuators
- 26c.: Poppet-type 2/2-way valve connecting the first actuator port of the third proportional hydraulic valve to the bottom chambers of the hydraulic linear actuators
- 27a.: Poppet-type 2/2-way valve connecting the second actuator port of the first proportional hydraulic valve to the piston rod chambers of the hydraulic linear actuators
- 27b.: Poppet-type 2/2-way valve connecting the second actuator port of the second proportional hydraulic valve to the piston rod chambers of the hydraulic linear actuators
- 28a.: Check valve connecting the second actuator port of the first proportional hydraulic valve to the piston rod chambers of the hydraulic linear actuators
- 28b.: Check valve connecting the second actuator port of the second proportional hydraulic valve to the piston rod chambers of the hydraulic linear actuators
- 28c.: Check valve connecting the second actuator port of the second proportional hydraulic valve to the piston rod chambers of the hydraulic linear actuators
- 29.: Return line
- 30.: Check valve arranged in the return line

- Ta: Tank port of the first proportional hydraulic valve
- Tb: Tank port of the second proportional hydraulic valve
- Tc: Tank port of the third proportional hydraulic valve
- Pa: Pressure port of the first proportional hydraulic valve
- Pb: Pressure port of the second proportional hydraulic valve
- Pc: Pressure port of the third proportional hydraulic valve
- Aa: First actuator port of the first proportional hydraulic valve
- Ab: First actuator port of the second proportional hydraulic valve
- Ac: First actuator port of the third proportional hydraulic valve
- Ba: Second actuator port of the first proportional hydraulic valve
- Bb: Second actuator port of the second proportional hydraulic valve
- Bc: Second actuator port of the third proportional hydraulic valve

## Claims

1. A wind turbine (1) having a rotor (4) with at least two blades (5) and a blade pitch system (6) for controlling the pitch angle of said blades (5),
the blade pitch system (6) comprising for each of said blades (5) a hydraulic blade pitch drive (8), at least two valves (22a, 22b, 22c) mutually connected in parallel for controlling a flow of liquid to the hydraulic blade pitch drive (8) for that blade (5) and a pressure line (23) for providing pressurised fluid to said parallel connected valves (22a, 22b, 22c),
wherein said parallel connected valves (22a, 22b, 22c) each comprise an arrangement for providing a variable flow of liquid and wherein said parallel connected valves (22a, 22b, 22c) are proportional hydraulic spool valves,
wherein the hydraulic blade pitch drive (8) for each of said blades (5) comprises at least one linear hydraulic actuator (15a, 15b, 15c) connected to said blades (5) and to a rotor hub (7) of the rotor (4),
wherein said at least one linear hydraulic actuator (15a; 15b; 15c) comprises a piston (16) arranged displaceable within a cylinder (17) which is divided by said piston (16) into a piston rod chamber (18) having a piston rod (19), and a bottom chamber (20) which does not have said piston rod (19), an area of said piston (16) facing said bottom chamber (20) being larger than an area of said piston (16) facing said piston rod chamber (18) due to the presence of said piston rod (19), and
wherein said parallel connected valves (22a, 22b, 22c) are arranged to provide a flow of liquid to said piston rod chamber (18) of the hydraulic linear actuator (15a, 15b, 15c),
**characterized by**
further comprising at least one first one-way valve (28a, 28b, 28c) being arranged between said parallel connected valves (22a, 22b, 22c) and said at least one hydraulic linear actuator (15a, 15b, 15c) such that a flow of liquid may be provided to said piston rod chamber (18), and
a separate return line (29) equipped with a second one-way valve (30) connecting said piston rod chamber (18) to said pressure line (23) for providing pressurised fluid to said parallel connected valves (22a, 22b, 22c) so as to allow regeneration of the pressure when said parallel connected valves (22a, 22b, 22c) are operated to allow a flow of liquid from said pressure line (23) to said bottom chamber (20) of said at least one hydraulic linear actuator (15a, 15b, 15c).

2. A wind turbine according to claim 1, wherein the proportional hydraulic spool valves are 4/3-way valves.

3. A wind turbine according to claim 1 or 2, comprising three of said valves connected in parallel for controlling said flow of liquid to the hydraulic blade pitch drive for each blade.

4. A wind turbine according to any of the preceding claims, wherein at least one of said valves (22a, 22b, 22c) is arranged to be inoperative at relatively lower pitch speeds and to be operated together with one or more of the remaining of said valves (22a, 22b, 22c) for providing relatively higher pitch speeds.

5. A wind turbine according to any of the preceding claims, wherein one of said valves (22a, 22b, 22c) is arranged to be operated as a back-up in case of a malfunction of one or more of the remaining of said valves (22a, 22b, 22c).

6. A wind turbine according to any of the preceding claims, wherein the hydraulic blade pitch drive for each of said blades comprises at least two linear hydraulic actuators (15a, 15b, 15c) connected to the blade and to a rotor hub (7) of the rotor and wherein said at least two parallel connected valves are arranged to control the flow of liquid to each of the linear hydraulic actuators (15a, 15b, 15c) of that blade.

7. A wind turbine according to claim 6, wherein the hydraulic blade pitch drive for each of said blades comprises three linear hydraulic actuators connected to the blade and to a rotor hub of the rotor.

8. A wind turbine according to claim 6 or 7, wherein the linear hydraulic actuators of the hydraulic blade pitch drive for each of said blades are of identical configuration and are mutually connected in parallel so that the piston rod chambers (18) of the actuators are mutually connected and the bottom chambers (20) of the actuators are mutually connected.

9. A wind turbine according to any of claims 1 to 8, further comprising valve means (26a, 26b, 26c, 27a, 27b) arranged for selectively separating the parallel connection of the valves.

## Patentansprüche

1. Windturbine (1), die einen Rotor (4) mit mindestens zwei Blättern (5) und ein Blattwinkelverstellsystem (6) zum Steuern des Anstellwinkels der Blätter (5) aufweist,
wobei das Blattwinkelverstellsystem (6) für jedes Blatt (5) einen hydraulischem Antrieb (8) für die Blattwinkelverstellung, mindestens zwei Ventile (22a, 22b, 22c), die miteinander parallel verbunden sind, um eine Flüssigkeitsströmung zu dem hydraulischen Antrieb (8) für die Blattwinkelverstellung für das zugehörige Blatt (5) zu steuern, und eine Druckleitung (23), um ein unter Druck stehendes Fluid den parallel verbundenen Ventilen (22a, 22b, 22c) bereitzustellen, umfasst,
wobei die parallel verbundenen Ventile (22a, 22b, 22c) jeweils eine Anordnung umfassen, um eine variable Flüssigkeitsströmung bereitzustellen, und wobei die parallel verbundenen Ventile (22a, 22b, 22c) proportionale hydraulische Steuerventile sind,
wobei der hydraulische Antrieb (8) für die Blattwinkelverstellung für jedes Blatt (5) mindestens eine geradlinige hydraulische Betätigungsvorrichtung (15a, 15b, 15c) umfasst, die mit den Blättern (5) und mit der Rotornabe (7) des Rotors (4) verbunden ist,
wobei die mindestens eine geradlinige hydraulische Betätigungsvorrichtung (15a; 15b; 15c) einen Kolben (16) umfasst, der innerhalb eines Zylinders (17), der durch den Kolben (16) in eine Kolbenstangenkammer (18) mit einer Kolbenstange (19) und in eine Bodenkammer (20), die die Kolbenstange (19) nicht aufweist, unterteilt ist, verschiebbar angeordnet ist, wobei eine Fläche des Kolbens (16), die der Bodenkammer (20) zugewandt ist, auf Grund des Vorhandenseins der Kolbenstange (19) größer als eine Fläche des Kolbens (16) ist, die der Kolbenstangenkammer (18) zugewandt ist, und
wobei die parallel verbundenen Ventile (22a, 22b, 22c) angeordnet sind, um der Kolbenstangenkammer (18) der hydraulischen geradlinigen Betätigungsvorrichtung (15a; 15b; 15c) eine Flüssigkeitsströmung bereitzustellen,
**dadurch gekennzeichnet, dass** das hydraulische Blattwinkelverstellsystem ferner umfasst:
mindestens ein erstes Einwegventil (28a, 28b, 28c), das zwischen den parallel verbundenen Ventilen (22a, 22b, 22c) und der mindestens einen hydraulischen geradlinigen Betätigungsvorrichtung (15a, 15b, 15c) derart angeordnet ist, dass eine Flüssigkeitsströmung der Kolbenstangenkammer (18) bereitgestellt werden kann, und
eine getrennte Rückführungsleitung (29), die mit einem zweiten Einwegventil (30) ausgerüstet ist, das die Kolbenstangenkammer (18) mit der Druckleitung (23) verbindet, um ein unter Druck stehendes Fluid den parallel verbundenen Ventilen (22a, 22b, 22c) bereitzustellen, um eine Druckerneuerung zu ermöglichen, wenn die parallel verbundenen Ventile (22a, 22b, 22c) betrieben werden, um eine Flüssigkeitsströmung von der Druckleitung (23) zu der Bodenkammer (20) der mindestens einen hydraulischen geradlinigen Betätigungsvorrichtung (15a, 15b, 15c) zu ermöglichen.

2. Windturbine nach Anspruch 1, wobei die proportionalen hydraulischen Steuerventile 4/3-Wegventile sind.

3. Windturbine nach Anspruch 1 oder 2, die drei der Ventile umfasst, die parallel verbunden sind, um die Flüssigkeitsströmung zu dem hydraulischen Antrieb für die Blattwinkelverstellung für jedes Blatt zu steuern.

4. Windturbine nach einem der vorhergehenden Ansprüche, wobei mindestens eines der Ventile (22a, 22b, 22c) angeordnet ist, um bei relativ niedrigen Anstellwinkelgeschwindigkeiten außer Betrieb zu sein, und um zusammen mit einem oder mit mehreren der übrigen Ventile (22a, 22b, 22c) betrieben zu werden, um relativ hohe Anstellwinkelgeschwindigkeiten bereitzustellen.

5. Windturbine nach einem der vorhergehenden Ansprüche, wobei eines der Ventile (22a, 22b, 22c) angeordnet ist, um im Falle einer Fehlfunktion von einem oder mehreren der übrigen Ventile (22a, 22b, 22c) als Reserve betrieben zu werden.

6. Windturbine nach einem der vorhergehenden Ansprüche, wobei der hydraulische Antrieb für die Blattwinkelverstellung für jedes Blatt mindestens zwei geradlinige hydraulische Betätigungsvorrichtungen (15a, 15b, 15c) umfasst, die mit dem Blatt und mit einer Rotornabe (7) des Rotors verbunden sind, und wobei die mindestens zwei parallel verbundenen Ventile angeordnet sind, um die Flüssigkeitsströmung zu jeder geradlinigen hydraulischen Betätigungsvorrichtung (15a, 15b, 15c) des zugehörigen Blatts zu steuern.

7. Windturbine nach Anspruch 6, wobei der hydraulische Antrieb für die Blattwinkelverstellung für jedes Blatt drei geradlinige hydraulische Betätigungsvorrichtungen umfasst, die mit dem Blatt und mit einer Rotornabe des Rotors verbunden sind.

8. Windturbine nach Anspruch 6 oder 7, wobei die geradlinigen hydraulischen Betätigungsvorrichtungen des hydraulischen Antriebs für die Blattwinkelverstellung für jedes Blatt von identischer Konfiguration sind und miteinander derart parallel verbunden sind, dass die Kolbenstangenkammern (18) der Betätigungsvorrichtungen miteinander verbunden sind und die Bodenkammern (20) der Betätigungsvorrichtungen miteinander verbunden sind.

9. Windturbine nach einem der Ansprüche 1 bis 8, die ferner Ventilmittel (26a, 26b, 26c, 27a, 27b) umfasst, die angeordnet sind, um wahlweise die parallele Verbindung der Ventile zu trennen,

## Revendications

1. Eolienne (1) ayant un rotor (4) avec au moins deux pales (5) et un système de pas de pales (6) pour commander l'angle de pas desdites pales (5),
le système de pas de pales (6) comprenant pour chacune desdites pales (5) une commande de pas de pales hydraulique (8), au moins deux soupapes (22a, 22b, 22c) mutuellement raccordées en parallèle pour commander un écoulement de liquide vers la commande de pas de pales hydraulique (8) pour cette pale (5) et une conduite sous pression (23) pour fournir du fluide sous pression auxdites soupapes raccordées en parallèle (22a, 22b, 22c), dans laquelle lesdites soupapes raccordées en parallèle (22a, 22b, 22c) comprennent chacune un aménagement pour fournir un écoulement de liquide variable et dans laquelle lesdites soupapes raccordées en parallèle (22a, 22b, 22c) sont des distributeurs à tiroir hydraulique proportionnels, dans laquelle la commande de pas de pales hydraulique (8) pour chacune desdites pales (5) comprend au moins un actionneur hydraulique linéaire (15a, 15b, 15c) raccordé auxdites pales (5) et à un moyeu (7) du rotor (4),
dans laquelle ledit au moins un actionneur hydraulique linéaire (15a ; 15b ; 15c) comprend un piston (16) aménagé de manière à pouvoir se déplacer dans un cylindre (17) qui est divisé par ledit piston (16) en une chambre de tige de piston (18) ayant une tige de piston (19), et une chambre inférieure (20) qui n' a pas ladite tige de piston (19), une zone dudit piston (16) tournée vers ladite chambre inférieure (20) étant plus grande qu'une zone dudit piston (16) tournée vers ladite chambre de tige de piston (18) en raison de la présence de ladite tige de piston (19), et
dans laquelle lesdites soupapes raccordées en parallèle (22a, 22b, 22c) sont aménagées pour fournir un écoulement de liquide à ladite chambre de tige de piston (18) de l'actionneur linéaire hydraulique (15a, 15b, 15c),
**caractérisée en ce qu'**elle comprend en outre au moins une première soupape unidirectionnelle (28a, 28b, 28c) qui est aménagée entre lesdites soupapes raccordées en parallèle (22a, 22b, 22c) et ledit au moins un actionneur linéaire hydraulique (15a, 15b, 15c) de sorte qu'un écoulement de liquide puisse être fourni à ladite chambre de tige de piston (18), et
une conduite de retour séparée (29) équipée d'une seconde soupape unidirectionnelle (30) raccordant ladite chambre de tige de piston (18) à ladite conduite sous pression (23) pour fournir du fluide sous pression auxdites soupapes raccordées en parallèle (22a, 22b, 22c) de manière à permettre la régénération de la pression lorsque lesdites soupapes raccordées en parallèle (22a, 22b, 22c) sont actionnées pour permettre un écoulement de liquide de ladite conduite de pression (23) à ladite chambre inférieure (20) dudit au moins un actionneur linéaire hydraulique (15a, 15b, 15c).

2. Eolienne selon la revendication 1, dans laquelle les distributeurs à tiroir hydraulique proportionnels sont des soupapes à 4/3 voies.

3. Eolienne selon la revendication 1 ou la revendication 2, comprenant trois desdites soupapes raccordées en parallèle pour commander ledit écoulement de liquide vers la commande de pas de pales hydraulique pour chaque pale.

4. Eolienne selon l'une quelconque des revendications précédentes, dans laquelle au moins l'une desdites soupapes (22a, 22b, 22c) est aménagée pour être inopérante à des vitesses de pas relativement inférieures et pour être actionnée conjointement avec une ou plus du restant desdites soupapes (22a, 22b, 22c) pour fournir des vitesses de pas relativement plus élevées.

5. Eolienne selon l'une quelconque des revendications précédentes, dans laquelle l'une desdites soupapes (22a, 22b, 22c) est aménagée pour être actionnée comme réserve dans le cas d'un mauvais fonctionnement d'une ou plus du restant desdites soupapes (22a, 22b, 22c).

6. Eolienne selon l'une quelconque des revendications précédentes, dans laquelle la commande de pas de pales hydraulique pour chacune desdites pales comprend au moins deux actionneurs hydrauliques linéaires (15a, 15b, 15c) raccordés à la pale et à un moyeu (7) du rotor et dans laquelle lesdites au moins deux soupapes raccordées en parallèle sont aménagées pour commander l'écoulement de liquide vers chacun des actionneurs hydrauliques linéaires (15a, 15b, 15c) de cette pale.

7. Eolienne selon la revendication 6, dans laquelle la commande de pas de pales hydraulique pour chacune desdites pales comprend trois actionneurs hydrauliques linéaires raccordés à la pale et à un moyeu du rotor.

8. Eolienne selon la revendication 6 ou la revendication 7, dans laquelle les actionneurs hydrauliques linéaires de la commande de pas de pale hydraulique pour chacune desdites pales sont de configuration identique et sont mutuellement raccordés en parallèle de sorte que les chambres de tige de piston (18) des actionneurs soient mutuellement raccordées et que les chambres inférieures (20) des actionneurs soient mutuellement raccordées.

9. Eolienne selon l'une quelconque des revendications 1 à 8, comprenant en outre des moyens à soupape (26a, 26b, 26c, 27a, 27b) aménagés pour séparer sélectivement le raccord parallèle des soupapes.
